# EUROPEAN PATENT APPLICATION

(11) **EP 4 822 318 A1**
(43) Date of publication of application: **14.10.2026**
(21) Application number: 25169037.6
(22) Date of filing: 08.04.2025
(51) Int. Cl.: G01L 9/00, G01L 9/14, G01L 11/00, G01L 19/00, G01L 23/04, G01L 23/08, G01L 23/14, H01H 33/56, H02B 13/035

(54) **A MONITORING ARRANGEMENT FOR GAS-INSULATED ELECTRICAL APPARATUSES**

(71) Applicant: ABB Schweiz AG, 5400 Baden (CH)
(72) Inventor: Cereda, Carlo, 24043 Caravaggio (BG) (IT)
(74) Representative: De Bortoli, Eros

(57) **Abstract**

A monitoring arrangement for monitoring pressure and/or density of an insulating gas in a sealed tank of an electrical apparatus for electric grids or systems, said monitoring arrangement comprising:
- a propeller unit arranged in an internal volume of said sealed tank, wherein said propeller unit comprises an inner rotor member rotatable about a rotation axis (A) and at least partially made of a ferromagnetic material, wherein said propeller unit comprises a propeller member mechanically coupled to said inner rotor member in such a way to rotate about said rotation axis together with said inner rotor member, said propeller member having one or more blades immersed in said insulating gas;
- a magnetic field generation unit arranged outside said sealed tank and operatively coupled to said propeller unit, wherein said magnetic field generation unit is structured to generate a rotating magnetic field enchaining with said inner rotor member and causing said inner rotor member to rotate about said rotation axis together with said propeller member;
- a sensing unit arranged outside said sealed tank and operatively coupled to said magnetic field generation unit, wherein said sensing unit is structured to provide first detection data indicative of the electric power absorbed by said magnetic field generation unit to generate said rotating magnetic field;
- a power and control unit arranged outside said sealed tank and operatively coupled to said magnetic field generation unit and to said sensing unit, wherein said power and control unit is structured to drive said magnetic field generation unit so that said magnetic field generation unit generates said rotating magnetic field and causes said inner rotor member to rotate about said rotation axis together with said propeller member, wherein said power and control unit is structured to receive and process said first detection data and generate first measurement data indicative of at least one between density and pressure of said insulating gas based on said first detection data.

## Description

The present invention relates to the field of electrical apparatuses intended to be installed in electric grids or systems, for example in electric power distribution grids. More particularly, the present invention relates to a monitoring arrangement for monitoring pressure and/or density of an insulating gas contained in a sealed tank of an electrical apparatus. In a further aspect, the present invention relates to a monitoring method for monitoring pressure and/or density of an insulating gas contained in a sealed tank of an electrical apparatus.

Many electrical apparatuses for electric grids, e.g., switchgears and related components, circuit breakers, disconnectors, load-break switches, and the like, include a sealed tank where electrical components are accommodated and immersed in a pressurized insulating gas that ensures a suitable dielectric insulation between live parts.

Most traditional gas-insulated electrical apparatuses employ sulphur hexafluoride (SF₆) as this insulating gas ensures excellent performances in terms of dielectric insulation.

However, SF₆ is notoriously a potent greenhouse gas, and its usage is subject to severe restrictions for environmental preservation purposes. For this reason, over the years, there have been designed gas insulated electrical apparatuses employing different insulating gases, such as pressurized dry air or more environment-friendly insulating gases, e.g., mixtures of oxygen, nitrogen, carbon dioxide and/or fluorinated gases.

As is known, a relevant problem in modern gas-insulated electrical apparatuses consists in monitoring the pressure and/or density of the insulating gas within the sealed tank as any pressure loss may jeopardize the dielectric properties of the insulating gas.

Many state-of-the-art solutions provide for arranging a pressure sensor within the sealed tank, which can communicate with an electronic unit arranged outside the tank through a sealed wired connection passing through an outer wall of the sealed tank.

The main drawback of these arrangements consists in that they foresee to make a pass-through aperture in a wall of the sealed tank, which may jeopardize the hermetic seal of this latter, especially in a long-term perspective.

To overcome this relevant issue, there have been developed monitoring devices capable of providing information on the state of the insulating gas and, at the same time, preserving the structural integrity of the sealed tank.

DE102014203058A1 discloses a monitoring device designed to monitor the pressure of an insulating gas in an encapsulated container of a gas-insulated switchgear.

The monitoring device includes a permanent magnet in the internal volume of the encapsulated container, which is arranged in such a way that its position depends on the gas pressure in the container, and a reed sensor arranged outside the encapsulated container for detecting a change of position of the internal permanent magnet.

EP0999625A1 discloses another monitoring device designed to monitor the pressure of an insulating gas in the sealed tank of a piece of gas-insulated electrical equipment.

The monitoring device includes a first permanent magnet in the internal volume of the encapsulated container, which is mechanically coupled to a bellow capable of deforming in response to a pressure variation of the insulating gas.

The first permanent magnet is magnetically coupled through a wall of the sealed tank with a second permanent magnet placed outside the sealed tank in such a way that the first and second permanent magnets can roll according to the opposite direction along opposite surfaces of the tank wall, when the internal bellow is subject to a deformation caused by a pressure variation. The monitoring device includes signalling means operatively coupled to the second permanent magnet to indicate whether the insulating gas is subject to pressure variations.

The above-mentioned solutions of the state of the art are rather complex and expensive to arrange in practice and show some evident limitations in terms of reliability of use. As an example, the arrangement of a permanent magnet within the sealed tank represents a critical solution from a designing point of view. The permanent magnet is, in fact, immersed in a harsh environment where particularly intense magnetic and electric fields might be generated by short circuit and lightnings. It may thus be subject to demagnetization processes, which would fully jeopardize the operation of the monitoring device.

The main aim of the present invention is to provide a monitoring arrangement for monitoring at least one between pressure and density of an insulating gas contained in a sealed tank of a gas-insulated electrical apparatus, which allows overcoming or mitigating the above-described drawbacks of the state of the art.

Within this aim, a purpose of the present invention is to provide a monitoring arrangement capable of providing quantitative measurements of at least one between pressure and density of the insulating gas.

A further purpose of the present invention is to provide a monitoring arrangement having a relatively simple construction and shows high levels of reliability in use, particularly for the components to be placed inside the sealed tank.

A further purpose of the present invention is to provide a monitoring arrangement relatively easy and cheap to manufacture at industrial level and to be installed in an electrical apparatus.

The above aim and purposes, as well as other purposes that will emerge clearly from the following description and attached drawings, are provided, according to the invention, by a monitoring arrangement for gas-insulated electrical apparatuses, according to the following claim 1 and the related dependent claims.

In general terms, the monitoring arrangement, according to the invention, is structured for monitoring at least one between pressure and density of an insulating gas in the sealed tank of a gas-insulated electrical apparatus intended for installation in electric grids or systems.

The monitoring arrangement, according to the invention, comprises a propeller unit arranged in an internal volume of the sealed tank. The propeller unit comprises an inner rotor member, which can rotate around a rotation axis, and which is at least partially made of a ferromagnetic material.

The propeller unit further comprises a propeller member mechanically coupled to the inner rotor member in such a way to be able to rotate about the above-mentioned rotation axis together with said inner rotor member. The propeller member has one or more blades immersed in the insulating gas contained in the sealed tank.

The monitoring arrangement, according to the invention, comprises a magnetic field generation unit arranged outside the sealed tank and operatively coupled to the aforesaid propeller unit.

In operation, for example during a measurement session of the monitoring arrangement, the magnetic field generation unit generates a rotating magnetic field enchaining with the inner rotor member and causing said inner rotor member to rotate about the above-mentioned rotation axis together with the propeller member coupled thereto.

The monitoring arrangement, according to the invention, comprises a power sensing unit arranged outside the sealed tank and operatively coupled to the magnetic field generation unit. In operation, the power sensing unit provides first detection data indicative of the electric power absorbed by the magnetic field generation unit to generate the aforesaid rotating magnetic field. The monitoring arrangement, according to the invention, comprises a power and control unit arranged outside the sealed tank and operatively coupled to the magnetic field generation unit and to the power sensing unit.

In operation, the power and control unit drives the magnetic field generation unit so that said magnetic field generation unit generates the aforesaid rotating magnetic field and causes the inner rotor member to rotate about the above-mentioned rotation axis together with the propeller member. The power and control unit receives and processes the above-mentioned first detection data and generates first measurement data indicative of at least one between density and pressure of the insulating gas based on the acquired first detection data.

According to an aspect of the invention, the propeller unit and the magnetic field generation unit are arranged in proximity of an outer wall (or wall portion) of the sealed tank, which is made of a non-ferromagnetic material, for example an electrically insulating material. According to an aspect of the invention, the propeller unit and the magnetic field generation unit are arranged at opposite positions relative to an outer wall of the sealed tank in proximity of opposite internal and external surfaces of said outer wall, respectively.

According to some embodiments of the invention, the magnetic field generation unit includes an electric motor.

According to other embodiments of the invention, the magnetic field generation unit includes an electric stator having a plurality of electric windings fed by an electronic inverter.

According to other embodiments of the invention, the magnetic field generation unit includes an actuator, for example an electric motor, and an outer rotor member mechanically coupled to said actuator in such a way to rotate about the rotation axis of the above-mentioned propeller unit. The aforesaid outer rotor member includes one or more magnetic field generation elements, which may be formed by one or more permanent magnets or electric windings fed by a power supply.

According to an aspect of the invention, the monitoring arrangement further comprises a temperature sensing unit positioned outside the sealed tank and operatively coupled to the power and control unit.

In operation, the temperature sensing unit provides second detection data indicative of an environmental temperature in proximity of the sealed tank. The power and control unit receives and processes the above-mentioned second detection data and generates second temperature-compensated measurement data indicative of at least one between density and pressure of said insulating gas based on the above-mentioned first measurement data and second detection data. According to a further aspect, the present invention relates to an electrical apparatus including the monitoring arrangement as described above. Preferably, said electrical apparatus is a gas-insulated switchgear.

According to a further aspect, the present invention relates to a method for monitoring at least one between density and pressure of an insulating gas in the sealed tank of an electrical apparatus. The method according to the invention, comprises the following steps:
- providing a propeller unit arranged in an internal volume of the sealed tank. The propeller unit comprises an inner rotor member rotatable about a rotation axis and at least partially made of a ferromagnetic material. The propeller unit further comprises a propeller member mechanically coupled to the inner rotor member in such a way to rotate about the above-mentioned rotation axis together with said inner rotor member. The propeller member has one or more blades immersed in said insulating gas;
- providing a magnetic field generation unit arranged outside the sealed tank and operatively coupled to the aforesaid propeller unit. **In** operation, the magnetic field generation unit can generate a rotating magnetic field enchaining with the inner rotor member and causing said inner rotor member to rotate about the above-mentioned rotation axis together with the above-mentioned propeller member;
- driving the magnetic field generation unit in such a way to generate the aforesaid rotating magnetic field and cause the inner rotor member to rotate about the above-mentioned rotation axis together with the propeller member;
- acquiring first detection data indicative of the electric power absorbed by said magnetic field generation unit to generate said rotating magnetic field;
- generating first measurement data indicative of at least one between density and pressure of said insulating gas based on said first detection data.

Preferably, the method, according to the invention, comprises also the following steps:
- acquiring second detection data indicative of an environmental temperature in proximity of said sealed tank;
- generating second temperature-compensated measurement data indicative of at least one between density and pressure of said insulating gas based on said first measurement data and said second detection data.

The monitoring arrangement, according to the invention, is relatively simple to arrange in practice and ensures high level performances in terms of reliability of use.

The monitoring arrangement, according to the invention, can effectively signal pressure and/or density variations of the insulating gas in the sealed tank and provide a quantitative measurement of these physical quantities.

The monitoring arrangement, according to the invention, is relatively easy and cheap to manufacture at industrial levels and to be installed in an electrical apparatus.

Further features and advantages of the present invention will be more apparent from the description of preferred but not exclusive embodiments of the present invention, shown by way of examples in the accompanying drawings, wherein:

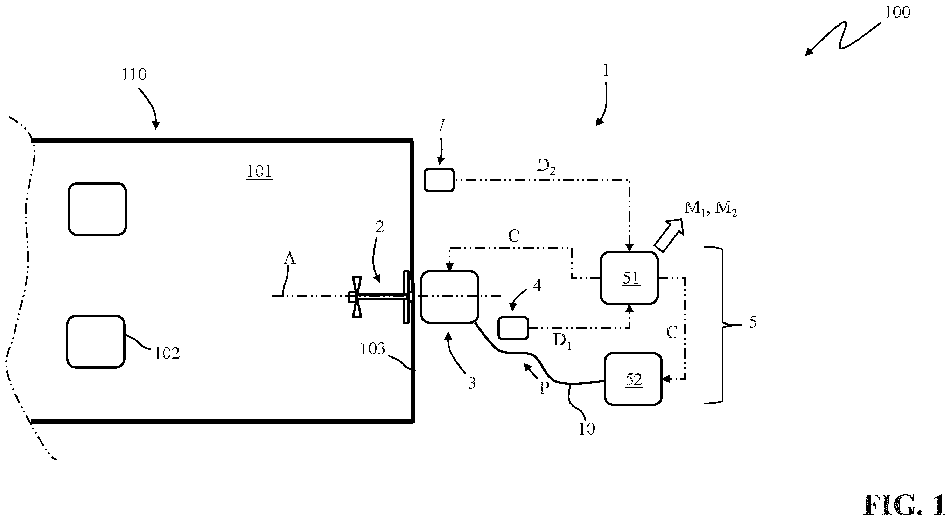

- Figure 1 schematically shows a partial view of a gas-insulated electrical apparatus including a monitoring arrangement, according to the present invention;
- Figures 2-5 schematically show some possible embodiments of relevant components of the monitoring arrangement, according to the invention.

Referring to the cited figures, the present invention relates to a gas monitoring arrangement 1 for a gas-insulated electrical apparatus 100 for electric grids or systems.

The electrical apparatus 100 may be, for example, a switchgear, a circuit breaker, a disconnector, a load-break switch, and the like.

Preferably, the electrical apparatus 100 is a gas-insulated switchgear operating at low or medium-high voltage levels, i.e. at voltage levels up to 72 kV AC and 100 kV DC. In principle, however, the gas-insulated electrical apparatus 100 can be of any type intended for installation in electric grids or systems and it can operate at any voltage level.

The electrical apparatus 100 comprises a sealed tank 110 containing an insulating gas, preferably pressurised air or a pressurized environment-friendly insulating gas.

The electrical apparatus 100 comprises one or more electrical components 102 (for example one or more switch poles) accommodated in the sealed tank 110 and immersed in the insulating gas, so that this latter can ensure a suitable dielectric insulation between live parts.

The sealed tank 110 has outer walls 103 defining an internal volume 101, where the electrical components 102 are accommodated and immersed in the insulating gas.

The outer walls 103 of the sealed tank 110 are preferably made of a non-ferromagnetic (diamagnetic) material, for example an electrically insulating material such as a thermosetting or thermoplastic resin.

In general, the sealed tank 110 can have any shape and size and it can be realised according to solutions of known type.

As mentioned above, the monitoring arrangement 1 is directed to monitor pressure and/or density of the insulating gas contained in the sealed tank 110.

In principle, the monitoring arrangement 1 can measure at least one between pressure and density of an insulating gas in the sealed tank 110. Preferably, however, the monitoring arrangement 1 is capable of providing measurement signals indicative of both pressure and density of an insulating gas in the sealed tank 110.

According to the invention, the monitoring arrangement 1 comprises a propeller unit 2, which is arranged in the internal volume 101 of the sealed tank 110, and a magnetic field generation unit 3 arranged outside the sealed tank 110 and operatively coupled to the propeller unit 2. Preferably, the propeller unit 2 and the magnetic field generation unit 3 are arranged at opposite positions relative to a same outer wall 103 of the sealed tank 110.

More precisely, the propeller unit 2 and the magnetic field generation unit 3 are arranged at opposite internal and external surfaces 104, 105 of a same outer wall 103 of the sealed tank 110, respectively.

As mentioned above, the outer walls 103 of the sealed tank 110 are preferably made of a non-ferromagnetic material. However, even in the embodiments in which the sealed tank 110 have some walls made of ferromagnetic material, the propeller unit 2 and the magnetic field generation unit 3 are preferably arranged at an outer wall (or wall portion) 103 made of a non-ferromagnetic - material. Anyway, in principle, the outer walls 103 can be made of any material. According to the invention, the propeller unit 2 comprises an inner rotor member 22 and a propeller member 21 mechanically coupled one to another.

Preferably, the inner rotor member 22 and the propeller member 21 are arranged respectively in a proximal position and in a distal position relative to the outer wall 103 of the sealed tank 110, at which the propeller unit 2 is placed.

The inner rotor member 22 can rotate about a rotation axis A, which is preferably perpendicular to the outer wall 103 of the sealed tank 110.

The inner rotor member 22 is at least partially made of a material sensitive to magnetic fields, preferably a ferromagnetic material (e.g., magnetic steel, or the like).

The propeller member 21 is mechanically coupled to the inner rotor member 22 in such a way to rotate about the rotation axis A together with the inner rotor member 21.

The propeller member 21 has one or more blades 24 immersed in the insulating gas filling the internal volume 101 of the sealed tank 110.

In principle, the propeller member 21 may have any number and any type of blades 24, according to the needs. As an example, the propeller member 21 may have three blades 24 extending radially relative to the rotation axis A. As a further example, the propeller member 21 may have a pair of spiral-shaped blades 24 developing along the rotation axis A.

The propeller member 21 is preferably made on an electrically insulating material. Preferably, the propeller unit 2 includes a motion transmission shaft 23 coupling the inner rotor member 22 and the propeller member 21. The motion transmission shaft 23 advantageously extends along the rotation axis A and rotates about this latter.

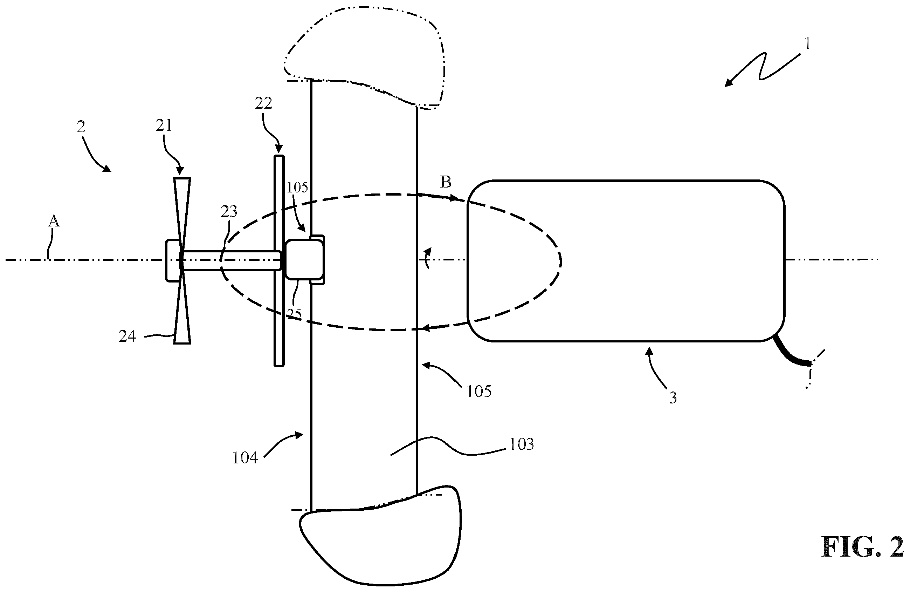

Figure 2 shows a possible embodiment of the propeller unit 2.

According to this embodiment, the propeller unit 2 includes an inner rotor member 22 formed by a disk 21 of ferromagnetic material, which is oriented in such a way to have its opposite base surfaces perpendicular to the rotation axis A.

At a base surface facing the internal surface 104 of the outer wall 103, at which the propeller unit 2 is located, the ferromagnetic disk 22 has a protrusion 25 rotationally inserted in a seat 105 obtained in the outer wall 103. The coupling seat 105 is conveniently arranged in such a way to hold the ferromagnetic disk 22 is position and let it rotate about the rotation axis A.

The propeller unit 2 has a motion transmission shaft 23 extending along the rotation axis A and made in one piece with the ferromagnetic disk 22.

The propeller unit 2 has a propeller 21 made of electrically insulating material forming the propeller member of the propeller unit 2. The propeller 21 includes a pair of blades 24 immersed in the insulating gas contained in the sealed tank 100.

The propeller 21 is coupled to a free end of the motion transmission shaft 23 in such a way that it is solidly coupled to the ferromagnetic disk 22 and rotate together with this latter about the rotation axis A.

As the skilled person can certainly understand, the propeller unit 2 may be realized according to a number of different variants, all falling within the scope of the invention.

For example, according to some embodiments of the invention (not shown), the inner rotor member 22 may be rotatably coupled to a roller member fixed to the internal surface 104 of the outer wall 103 of the sealed tank 110, at which the propeller unit 2 is located.

As a further example, according to some embodiments of the invention (not shown), the inner rotor member 22 and the propeller member 21 are mechanically coupled through one or more motion transmission components different from a motion transmission shaft.

As yet a further example, according to some embodiments of the invention (not shown), the inner rotor member 22 and the propeller member 212 may be realized in one piece, for example made of magnetic steel.

As mentioned above, according to the invention, the monitoring arrangement 1 comprises a magnetic field generation unit 3 arranged outside the sealed tank 110 and operatively coupled to the propeller unit 2.

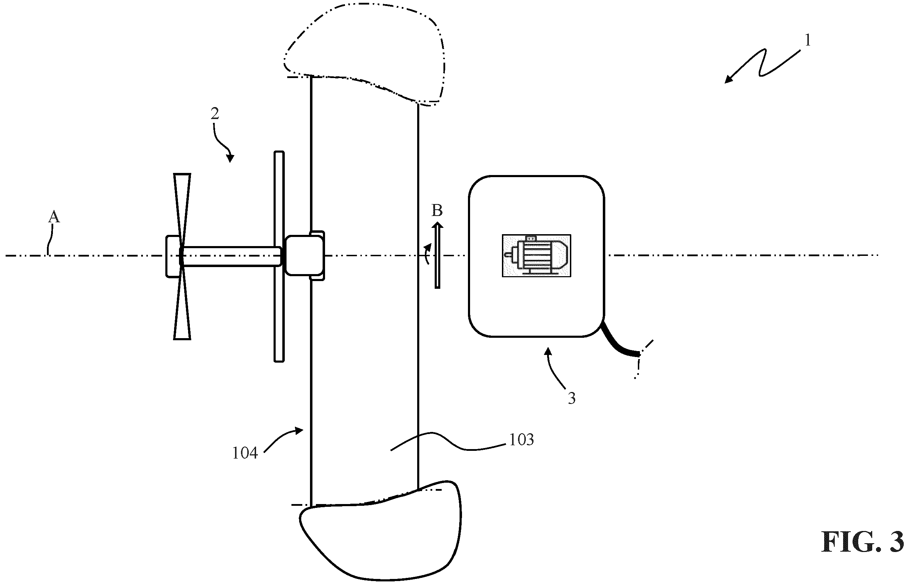

The magnetic field generation unit 3 is structured in such a way to generate a rotating magnetic field B during the operation of the monitoring arrangement (figures 3-5).

Preferably, the magnetic field generation unit 3 is positioned relative to the propeller unit 2 inside the sealed tank 110 in such a way that the generated magnetic field B rotates about the rotation axis A of the propeller unit 2. In practice, the rotating magnetic field B can be represented by a vector rotating about the rotation axis A on a plane perpendicular to this latter. During the operation of the monitoring arrangement, the rotating magnetic field B, which is generated by the magnetic field generation unit 3, passes through the non-magnetic outer wall (or wall portion) 103 of the sealed tank 110 and enchains with the inner rotor member 22, which is at least partially made of magnetically sensitive (e.g., ferromagnetic) material (figure 2).

A magnetic (inductive) coupling is thus formed between the magnetic field generation unit 3 and the inner rotor member 22 of the propeller unit through the outer wall 103 of the sealed tank 110. Since the magnetic field generation unit 3 generates a rotating magnetic field B, the inner rotor member 22 is subject to a magnetic field that generates eddy currents in the rotor member 22 (Lenz law). Such induced currents, in turn, interact with the rotating magnetic field and generate a magnetic torque like in an asynchronous (induction) motor. The inner rotor member 22 is thus forced to rotate about the rotation axis A together with the propeller member 21 (mechanically coupled with the rotor member 21).

It is evident how the assembly including the magnetic field generation unit 3 and the inner rotor member 22 forms a sort of induction motor. The inner rotor member 22 placed within the sealed tank 110 and the magnetic field generation unit 3 placed outside the sealed tank 110, form respectively, the stator element and the rotor element of such an induction motor.

It is further evidenced how the propeller member 21 forms a mechanical load actuated by the above-mentioned induction motor 3, 21 during the operation of the monitoring arrangement. As the propeller member 21 has its blades immersed in the insulating gas, the mechanical power, which the above-mentioned induction motor 3, 21 must provide to move rotationally the above-mentioned mechanical load 22, depends (with a direct proportionality) on the pressure and/or density of the insulating gas.

Figures 3-5 show possible embodiments of the magnetic field generation unit 3.

According to some embodiments of the invention (figure 3), the magnetic field generation unit 3 is formed by an electric motor, which is conveniently arranged in such a way to have its rotor axis aligned with the rotation axis A of the propeller unit 2.

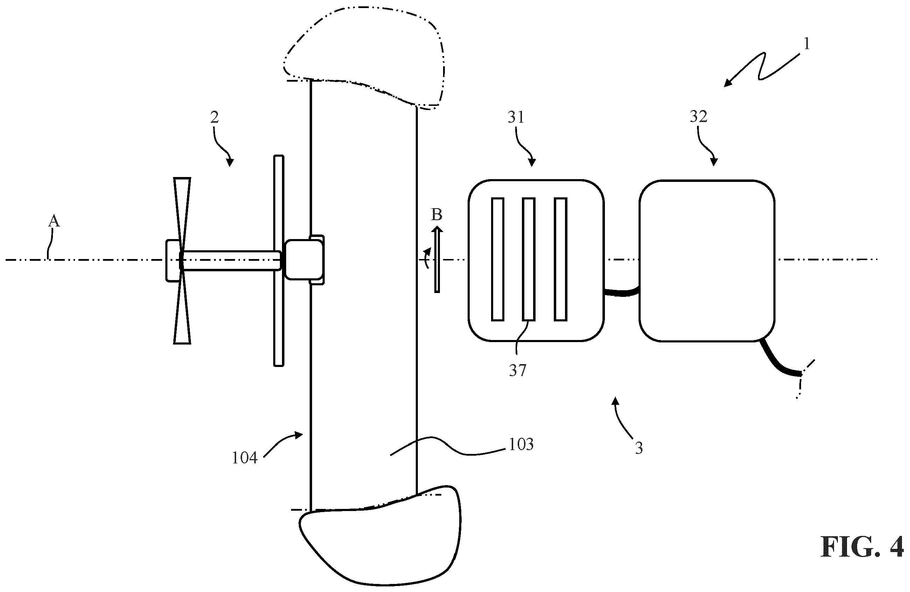

This solution is quite advantageous as it allows employing electromagnetic devices, which can be found commercially at extremely low costs, to implement the magnetic field generation unit 3. As an example, according to these embodiments of the invention, the magnetic field generation unit 3 may be formed by an electric motor of the type used in common household appliances. According to other embodiments of the invention (figure 4), the magnetic field generation unit 3 includes an electric stator 31 including a plurality of electric windings 37 fed by an electronic inverter 32. The electric stator 31 is conveniently arranged in such a way to have its windings with axes aligned with or parallel to the rotation axis A of the propeller unit 2 (i.e. perpendicular to the wall 103 of the tank 110).

This solution is structurally simple and cheap to realize at industrial level as no rotating parts are arranged outside the sealed tank 110. Additionally, it allows improving the magnetic coupling with the rotor member 22 of the propeller unit 2 during the operation of the monitoring arrangement.

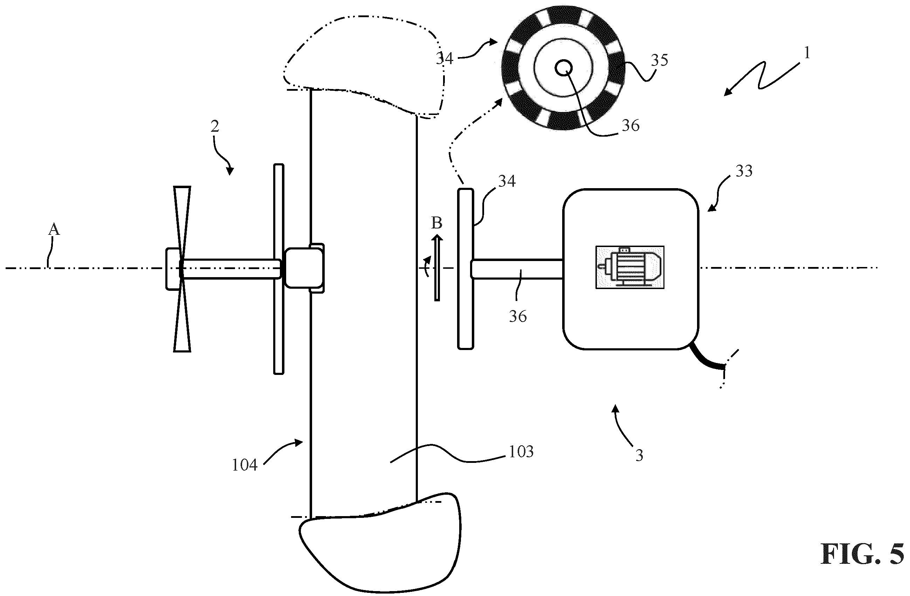

According to further embodiments of the invention (figure 5), the magnetic field generation unit 3 includes an actuator 33 and an outer rotor member 34 including a plurality of magnetic field generation elements 35 placed with alternate polarities along the circumference.

The actuator 33 can be formed by a traditional electric motor, for example of the type used in common household appliances, which is arranged in such a way to have a rotational actuation shaft aligned with the rotation axis A of the propeller unit 2.

The outer rotor member 34 is mechanically coupled to the actuator 33 and it is arranged in such a way to rotate about the rotation axis A of the propeller unit 2.

According to the embodiment shown in figure 5, the outer rotor member 34 is formed by a supporting disk (e.g., made of electrically insulating material) coupled to the rotating actuation shaft of the actuator 33 and having opposite base surfaces arranged perpendicularly to the rotation axis A.

At one or both the base surfaces of the supporting disk 34, the outer rotor member 34 includes a plurality of magnetic field generation elements 35 conveniently arranged according to symmetric configuration relative to the rotation axis A.

According to the variant shown in figure 5, the magnetic field generation elements 35 are formed by permanent magnets.

According to other possible variants (not shown), however, the magnetic field generation elements 35 can be formed by electric windings fed by an external power supply unit, for example through a system of sliding electric contacts. Such electric windings have conveniently winding axes parallel to the rotation axis A of the propeller unit 2.

The solution shown in figure 5 allows optimizing the magnetic coupling with the rotor member 22 of the propeller unit 2 during the operation of the monitoring arrangement. Also, even if it is more complex compared to the solutions of figures 3-4, it may be realized at industrial level at relatively low costs.

According to the invention, the monitoring arrangement 1 comprises a power sensing unit 4 operatively coupled to the magnetic field generation unit 3 and configured to detect the electric power P absorbed by the magnetic field generation unit 3.

The power sensing unit 4 can provide first detection data D₁ indicative of the electric power P absorbed by the magnetic field generation unit 3 when it is activated or fed to generate the rotating magnetic field B.

Preferably, the power sensing unit 4 includes one or more primary sensors (for example a voltage sensor and a current sensor) operatively coupled to a feeding line 30 of the magnetic field generation unit 3 and a suitably electronic circuitry to process the detection signals incoming from the above-mentioned primary sensors and provide the first detection data D₁.

**In** general, the power sensing unit 4 can be realized at industrial level according to well known solutions commonly adopted to realize electronic circuitry.

The power sensing unit 4 may be integrated with the magnetic field generation unit 3 in a same device. As an alternative, however, the power sensing unit 4 may be distinct from the magnetic field generation unit 3.

According to the invention, the monitoring arrangement 1 comprises a power and control unit 5 operatively coupled to the magnetic field generation unit 3 and the power sensing unit 4. The power and control unit 5 is structured to drive the magnetic field generation unit 3 by suitably feeding this latter through a suitable power supply line 10.

Eventually, the power and control unit 5 may be configured to exchange control signals and/or data signals with the magnetic field generation unit 3 to control the operation of this latter. Preferably, the power and control unit 5 comprises a power supply stage 52 electrically connected to the magnetic field generation unit 3 through the power supply line 10.

The power supply stage 52 may include a power supply circuit configured to harvest electric energy from a power source (not shown) and a driving circuit to drive the magnetic field generation unit 3 through suitable feeding signals (e.g., current and/or voltage signals). Preferably, the power and control unit 5 comprises a control stage 51 operatively coupled to the magnetic field generation unit 3, the power supply stage 52 and the power sensing unit 4. The control stage 51 is configured to exchange control signals and/or data signals to control the operation of the power supply stage 52 and, possibly, of the magnetic field generation unit 3. The control stage 51 is also configured to receive and process the above-mentioned first detection data D₁ provided by the sensing unit 4.

Preferably, the control stage 51 comprises suitable digital processing devices (e.g., one or more microprocessors) adapted to execute software instructions to carry out its functionalities.

**In** general, the power and control unit 5 can be realized at industrial level according to well known solutions commonly adopted to realize electronic circuitry.

The power and control unit 5 may be an electronic device integrating the above-mentioned control stage 51 and power supply stage 52. According to some embodiments, however, the control stage 51 and the power supply stage 52 may be formed by distinct electronic devices. The power and control unit 5 may be integrated with the magnetic field generation unit 3 and, possibly, with the power sensing unit 4 in a same device. As an alternative, however, the power and control unit 5 may be an electronic device distinct from the magnetic field generation unit 3 and/or from the sensing unit 4. In this case, the power and control unit 5 can be even arranged remotely with respect to these last devices.

According to some embodiments of the invention, the power and control unit 5 can be formed by or included in an IED (Intelligent Electronic Device), e.g. a controller or a relay, included in or operatively coupled to the electrical apparatus 100 to implement general control functionalities of the operation of the electrical apparatus 100.

As mentioned above, the power and control unit 5 is configured to drive the magnetic field generation unit 3, preferably during a measurement session of the pressure and/or density of the insulating gas contained in the sealed tank 110.

The power and control unit 5 may activate the magnetic field generation unit 3 on a periodic basis or in response to receiving of command or trigger signals from an external device or a suitable user interface (not shown).

During a measurement session, the power and control unit 5 drives the magnetic field generation unit 3 in such a way that this latter generates a rotating magnetic field B and it causes the inner rotor member 22 to rotate about the rotation axis A together with said propeller member 21.

During a measurement session, the power and control unit 5 receives and processes the first detection data D₁ and generates first measurement data M₁ indicative of the pressure and/or density of the insulating gas. The first measurement data M₁ are generated on the acquired first detection data D₁.

The solution provided by the invention is based on the circumstance that, during a measurement session (i.e., when the magnetic field generation unit is fed), the electric power absorbed by the magnetic field generation unit 3 substantially depends on the pressure and density of the insulating gas contained in the sealed tank 110.

As mentioned above, the magnetic field generation unit 3 and the inner rotor member 22 form a sort of induction motor that actuates a mechanical load formed by the propeller member 21 that has its blades 24 immersed in the insulating gas.

The mechanical power that the above-mentioned induction motor 3, 22 must provide to move rotationally the above-mentioned mechanical load 21 apparently depends (with a direct proportionality) on the pressure and density of the insulating gas.

The mechanical power necessary to move rotationally the above-mentioned mechanical load 21 is provided by the magnetic field generation unit 3 as the inner rotor member 22 is a purely passive component driven by the magnetic field generation unit 3 through a magnetic coupling. Therefore, the electric power P absorbed by the magnetic field generation unit 3 to generate the above-mentioned mechanical power depends (with a direct proportionality) on the pressure or density of the insulating gas.

In practice, the electric power *P* (measured in W) absorbed by the magnetic field generation unit 3, during a measurement session, can be expressed as: $P = f \left[p\right] = Q \left(T\right) ⋅ p / η$ where:
- *Q* is the volumetric flow rate of the insulating gas (measured in m³/s), which is dependent on the geometry of the propeller blades 24 and on the temperature *T* of the insulating gas;
- *p* is the insulating gas pressure (measured in Pa) inside the tank 110;
- *η* is a numeric coefficient indicative of the motion transmission efficiency of the rotating system formed by the propeller unit 2, which depends on the geometry of the components of the propeller unit 2.

Similarly, the measured electric power *P* can be expressed as a function of the insulating gas density ρ inside the tank 110 as this latter is apparently linked to the insulating gas pressure inside the tank 110.

In practice, the electric power *P* absorbed by the magnetic field generation unit 3, during a measurement session, can be also expressed as: $P = g \left[ρ\right]$ where ρ is the insulating gas density (measured in kg/m³) inside the tank 110.

The above-mentioned functions *f [], g[]*, which establish relationships between the electric power P absorbed by the magnetic field generation unit 3 to the pressure and density of the insulating gas within the sealed tank 110, can be set or calculated empirically, e.g., through a suitable calibration session of the monitoring arrangement 1.

As an example, the above-mentioned functions *f [], g[]* can be calculated by interpolating a series of detection values indicative the electric power P absorbed by the magnetic field generation unit 3, each of which is measured for corresponding predefined values of pressure and density of the insulating gas within the sealed tank 110.

As an alternative, the above-mentioned functions *f[]*, *g[]* can be calculated analytically based on the constructional characteristics of the propeller unit 2 and magnetic field generation unit 3, when assembled in the electrical apparatus 100.

As a further alternative, the above-mentioned functions *f []*, *g[]* can be calculated by carrying out suitable simulation tests of the behaviour of the propeller unit 2 and magnetic field generation unit 3 for different predefined values of pressure and density of the insulating gas within the sealed tank 110.

In view of the above, it is evident that the power and control unit 5 can generate the first measurement data M₁ indicative of the pressure and/or density of the insulating gas by suitably processing the first detection data D₁ indicative of the electric power P absorbed by the magnetic field generation unit 3 during a measurement session, in which the magnetic field generation unit 3 is activated (i.e., fed) to generate the rotating magnetic field B and cause the propeller unit 2 to rotate about the rotation axis A.

This solution is quite advantageous as it remarkably simplifies the detection process of the pressure and/or density of the insulating gas within the sealed tank 110.

This allows collecting accurate measurement data indicative of the pressure and/or density of the insulating gas. At the same time, the monitoring arrangement 1 can be easily implemented in different types of sealed tanks and electrical apparatuses with relatively simple adaptations. According to some embodiments of the invention, the monitoring arrangement 1 comprises a temperature sensing unit 7 positioned outside the sealed tank 110 and operatively coupled to the power and control unit 5, preferably to the control stage 51 of this latter.

The temperature sensing unit 7 is designed to provide second detection data D₂ indicative of the environmental temperature in proximity of the sealed tank 110.

The temperature sensing unit 7 may include a temperature sensor arranged in proximity of the sealed tank 110 and suitable electronic circuitry to process the detection signals incoming from said temperature sensor and provide the second detection data D₂.

In general, the temperature sensing unit 7 can be realized at industrial level according to well known solutions commonly adopted to realize electronic circuitry.

According to some embodiments of the invention, the temperature unit 7 can be formed by a temperature sensing unit employed in a control arrangement configured to implement general control functionalities of the operation of the electrical apparatus 100.

During a measurement session, the power and control unit 5 receives and processes the second detection data D₂ and generates second temperature-compensated measurement data M₂ indicative of pressure and/or density of the insulating gas within the sealed tank 110 based on the above-mentioned first measurement data M₁ and the second detection data D₂.

According to this embodiment of the invention, the power and control unit 5 employs the second detection data D₂ to compensate in temperature the above-mentioned first measurement data M₁. In this way, the power and control unit 5 can provide more accurate measurements of pressure and/or density of the insulating gas within the sealed tank 110, which consider the influence of possible environmental temperature fluctuations on the pressure and/or density measurements of the insulating gas. In fact, the density ρ of the gas inside the tank 110 is directly proportional to the pressure *p* of the gas and inversely proportional to the temperature *T* of the gas (state equation of the ideal gases).

The power control unit can use a temperature compensation function 5 to generate the second temperature-compensated measurement data M₂. Such a temperature compensation function can also be easily set during a calibration session of the monitoring arrangement 1 or calculated analytically based on experimental data.

In a further aspect, the present invention relates to a method for monitoring at least one between density and pressure of an insulating gas in the sealed tank of an electrical apparatus 100. According to the invention, the method comprises the step of providing a propeller unit 2 arranged in an internal volume 101 of the sealed tank 110.

The propeller unit 21 comprises an inner rotor member 22, which can rotate about the rotation axis A and which is at least partially made of a material sensitive to magnetic fields, preferably a ferromagnetic material.

The propeller unit 22 further comprises a propeller member 21 mechanically coupled to the inner rotor member 22 in such a way to rotate about said rotation axis A together with the inner rotor member 21.

The propeller member 21 has one or more blades 24 immersed in the insulating gas.

According to the invention, the method comprises the step of providing a rotating magnetic field generation unit 3 arranged outside the sealed tank 110 and operatively coupled to said propeller unit. The magnetic field generation unit 3 is structured to generate a rotating magnetic field enchaining with the inner rotor member 22 and causing the inner rotor member 22 to rotate about the rotation axis A together with the propeller member 21.

According to the invention, the method comprises the step of driving the magnetic field generation unit 3 in such a way to generate the rotating magnetic field B and cause the inner rotor member 22 to rotate about the rotation axis A together with the propeller member 21. According to the invention, the method comprises the step of acquiring the first detection data D₁ indicative of the electric power P absorbed by the magnetic field generation unit 3 to generate the rotating magnetic field B.

According to the invention, the method comprises the step of generating the first measurement data M₁ indicative of at least one between density and pressure of the insulating gas based on the acquired first detection data D₁.

Preferably, the method, according to the invention, comprises also the step of acquiring second detection data D₂ indicative of an environmental temperature in proximity of the sealed tank 110 and the step of generating second temperature-compensated measurement data M₂ indicative of at least one between density and pressure of said insulating gas based on the first measurement data M₁ and the second detection data D₂.

The monitoring arrangement, according to the invention, provides relevant advantages.

The monitoring arrangement, according to the invention, includes a pure passive rotating component (the propeller unit 2), placed in the internal volume 101 of the sealed tank 110, and an active component, (the magnetic field generation unit 3), placed outside the sealed tank 110 and capable of driving the above-mentioned passive component through a magnetic coupling. This solution apparently allows preserving the structural integrity of the sealed tank 110. On the other end, it ensures high levels of reliability in use as a highly reliable and maintenance-free component is placed inside the sealed tank 110 (instead of a permanent magnet as in the above-described solutions of the state of the art).

The monitoring device 1 allows determining pressure and density of the insulating gas within the sealed tank 110 of an electrical apparatus 100 by simply detecting the electric power absorbed by the magnetic field generation unit 3 during a measurement session.

This allows collecting accurate measurement data related to the pressure and/or density of the insulating gas. Also, the monitoring arrangement can ensure a relevant flexibility in use as it can be easily adapted to different types of sealed tanks and electrical apparatuses.

As an example, the monitoring arrangement 1 can be used for mere signalling purposes, i.e., to signal a pressure and/or density variation of the insulating gas within the sealed tank 110. This may be quite advantageous to generate alarms in case of de-pressurization events of the sealed tank 110.

As a further example, however, the monitoring arrangement 1 can be used for measuring periodically or whenever necessary the pressure and/or density of the insulating gas within the sealed tank 110. This may be quite advantageous to implement advanced control functionalities of the operation of the electrical apparatus 100 and to plan possible maintenance interventions on the sealed tank 110.

The monitoring arrangement, according to the invention, is structurally simple and it can be easily assembled in an electrical apparatus 100. Also, the data processing functionalities of the power and control unit 5 can be easily set up during a calibration phase of the monitoring arrangement, when this latter is assembled in the electrical apparatus.

The monitoring arrangement, according to the invention, is quite easy to manufacture at industrial levels, at competitive industrial costs with respect to the currently available solutions of the state of the art.

## Claims

1. A monitoring arrangement (1) for monitoring at least one between pressure and density of an insulating gas in a sealed tank (110) of an electrical apparatus (100) for electric grids or systems,
**characterised in that** it comprises:
- a propeller unit (2) arranged in an internal volume (101) of said sealed tank (110), wherein said propeller unit comprises an inner rotor member (22) rotatable about a rotation axis (A) and at least partially made of a ferromagnetic material,
wherein said propeller unit comprises a propeller member (21) mechanically coupled to said inner rotor member (22) in such a way to rotate about said rotation axis (A) together with said inner rotor member, said propeller member having one or more blades (24) immersed in said insulating gas;
- a magnetic field generation unit (3) arranged outside said sealed tank (110) and operatively coupled to said propeller unit,
wherein said magnetic field generation unit (3) is structured to generate a rotating magnetic field (B) enchaining with said inner rotor member (22) and causing said inner rotor member to rotate about said rotation axis (A) together with said propeller member (22);
- a sensing unit (4) arranged outside said sealed tank (110) and operatively coupled to said magnetic field generation unit (3),
wherein said sensing unit is structured to provide first detection data (D₁) indicative of the electric power (P) absorbed by said magnetic field generation unit to generate said rotating magnetic field (B);
- a power and control unit (5) arranged outside said sealed tank (110) and operatively coupled to said magnetic field generation unit (3) and to said sensing unit (4), wherein said power and control unit is structured to drive said magnetic field generation unit (3) so that said magnetic field generation unit generates said rotating magnetic field (B) and causes said inner rotor member (22) to rotate about said rotation axis (A) together with said propeller member (21),
wherein said power and control unit is structured to receive and process said first detection data (D₁) and generate first measurement data (M₁) indicative of at least one between density and pressure of said insulating gas based on said first detection data (D₁).

2. Electrical apparatus, according to claim 1, **characterised in that** said propeller unit (2) and said magnetic field generation unit (3) are arranged in proximity of an outer wall (103) of said sealed tank (110), which is made of a non-ferromagnetic material.

3. Electrical apparatus, according to one of the previous claims, **characterised in that** said propeller unit (2) and said magnetic field generation unit (3) are arranged at opposite positions relative to an outer wall (103) of said sealed tank (110) in proximity of opposite internal and external surfaces (104, 105) of said outer wall, respectively.

4. Electrical apparatus, according to one of the previous claims, **characterised in that** said magnetic field generation unit (3) includes an electric motor.

5. Electrical apparatus, according to one of the claims from 1 to 3, **characterised in that** said magnetic field generation unit (3) includes an electric stator (31) including a plurality of electric windings (37) fed by an electronic inverter (32).

6. Electrical apparatus, according to one of the claims from 1 to 3, **characterised in that** said magnetic field generation unit (3) includes an actuator (33) and an outer rotor member (34) mechanically coupled to said actuator in such a way to rotate about said rotation axis (A), said outer rotor member including one or more magnetic field generation elements (35).

7. Electrical apparatus, according to claim 6, **characterised in that** said magnetic field generation elements (35) are permanent magnets.

8. Electrical apparatus, according to claim 6, **characterised in that** said magnetic field generation elements (35) are electric windings fed by a power supply.

9. Electrical apparatus, according to one of the previous claims, **characterised in that** it comprises a temperature sensing unit (7) positioned outside said sealed tank (110) and operatively coupled to said power and control unit (5),
wherein said temperature sensing unit (4) is structured to provide second detection data (D₂) indicative of an environmental temperature in proximity of said sealed tank (110), wherein said power and control unit (5) is structured to receive and process said second detection data (D₂) and generate second temperature-compensated measurement data (M₂) indicative of at least one between density and pressure of said insulating gas based on said first measurement data (M₁) and said second detection data (D₂).

10. An electrical apparatus (100) for electric grids or systems comprising a sealed tank (110) containing an insulating gas and one or more electrical components (102) accommodated in said sealed tank (110) and immersed in said insulating gas, **characterised in that** it comprises a monitoring arrangement (1), according to one of the previous claims.

11. Electrical apparatus, according to claim 10, **characterised in that** it is a gas-insulated switchgear.

12. A method for monitoring at least one between density and pressure of an insulating gas in a sealed tank (110) of an electrical apparatus **characterised in that** it comprises the following steps:
- providing a propeller unit (2) arranged in an internal volume (101) of said sealed tank (110), wherein said propeller unit comprises an inner rotor member (22) rotatable about a rotation axis (A), said inner rotor member being at least partially made of a material sensitive to magnetic fields,
wherein said propeller unit comprises a propeller member (21) mechanically coupled to said inner rotor member (22) in such a way to rotate about said rotation axis (A) together with said inner rotor member, said propeller member having one or more blades (24) immersed in said insulating gas,
- providing a magnetic field generation unit (3) arranged outside said sealed tank (110) and operatively coupled to said propeller unit,
wherein, in operation, said magnetic field generation unit generates a rotating magnetic field (B) enchaining with said inner rotor member (22) and causing said inner rotor member to rotate about said rotation axis (A) together with said propeller member (21);
- driving said magnetic field generation unit (3) in such a way to generate said rotating magnetic field (B) and cause said inner rotor member (22) to rotate about said rotation axis (A) together with said propeller member (21);
- acquiring first detection data (D₁) indicative of the electric power (P) absorbed by said magnetic field generation unit to generate said rotating magnetic field (B);
- generating first measurement data (M₁) indicative of at least one between density and pressure of said insulating gas based on said first detection data (D₁).

13. Method, according to claim 12, **characterised in that** it comprises the following steps:
- acquiring second detection data (D₂) indicative of an environmental temperature in proximity of said sealed tank (110);
- generating second temperature-compensated measurement data (M₂) indicative of at least one between density and pressure of said insulating gas based on said first measurement data (M₁) and said second detection data (D₂).

14. Method, according to one of the claims from 12 to 13, **characterised in that** said electrical apparatus it is a gas-insulated switchgear.
